# FASCICULE DE BREVET EUROPEEN

(11) **EP 2 619 534 B1**
(45) Date de publication et mention de la délivrance du brevet: **12.08.2015**
(21) Numéro de dépôt: 11773759.3
(22) Date de dépôt: 23.09.2011
(51) Int. Cl.: G01L 3/24, B62M 6/50, B62M 3/08

(54) **PROCEDE DE MESURE DE PUISSANCE DANS UNE BICYCLETTE**
VERFAHREN ZUR MESSUNG DER LEISTUNG BEI EINEM FAHRRAD
METHOD FOR MEASURING POWER IN A BICYCLE

(30) Priorité: 23.09.2010 FR 1057646
(43) Date de publication de la demande: 31.07.2013
(73) Titulaire: Commissariat à l'Énergie Atomique et aux Énergies Alternatives, 75015 Paris (FR); Decathlon, 59650 Villeneuve D'ascq (FR)
(72) Inventeur: GROS, Jean-Philippe, F-38120 Le Fontanil Cornillon (FR); DAVID, Dominique, F-38640 Claix (FR); ARRIZABALAGA, Gorka, F-38250 Lans En Vercors (FR); BRULAIS, Sébastien, 38400 Saint Martin D'Heres (FR); MORIO, Cédric, F-59110 La Madeleine (FR); ANDROUET, Philippe, F-59800 Lille (FR)
(74) Mandataire: de Beaumont, Michel
(86) Numéro de dépôt international: PCT/FR2011/052216
(87) Numéro de publication internationale: WO 2012/038677

(56) Documents cités:
- EP-A2- 2 028 098
- SI-A- 22 645
- US-A1- 2007 245 835

## Description

### Domaine de l'invention

La présente invention concerne un système de mesure de la puissance utile développée dans un système à manivelle. Elle vise plus particulièrement un système de mesure de la puissance utile développée dans un véhicule à pédales, par exemple une bicyclette.

### Exposé de l'art antérieur

On a proposé plusieurs solutions pour mesurer la puissance utile développée par un cycliste dans sa pratique de la bicyclette. Par puissance utile, on entend la quantité d'énergie fournie par unité de temps, contribuant réellement à la mise en mouvement de la bicyclette.

On sait en effet qu'une partie des forces exercées par le cycliste ne contribue pas à la mise en mouvement de la bicyclette. A un instant donné, la proportion de l'énergie fournie qui contribue réellement à la mise en mouvement de la bicyclette dépend non seulement de la position angulaire du pédalier, mais aussi de divers facteurs tels que la pente, la position du cycliste, la cadence de pédalage, etc.

La connaissance, à tout instant, de la puissance utile développée, est susceptible d'aider les coureurs à optimiser leur pratique. Elle leur permet notamment de mieux gérer leur effort et leur mouvement de pédalage, à l'entraînement ou pendant une course.

On a proposé des systèmes intégrant un réseau de plusieurs jauges de contraintes disposées dans les pédales et/ou dans le pédalier pour déterminer, à tout instant, la répartition, dans un repère en trois dimensions, de la force exercée par le cycliste sur les pédales. La partie motrice de la force exercée peut ainsi être isolée. On en déduit le couple moteur exercé sur le pédalier. Des capteurs complémentaires sont en outre prévus pour déterminer à tout instant la position angulaire du pédalier et/ou de la pédale, ainsi que la vitesse angulaire du pédalier. On en déduit la puissance utile développée. Des exemples de dispositifs de ce type sont décrits dans les demandes de brevet WO2009083787 et WO8900401.

Un inconvénient de ces dispositifs réside dans la complexité du réseau de jauges de contraintes nécessaire pour isoler la partie motrice de la force exercée sur les pédales. A titre d'exemple, dans la demande de brevet WO2009083787, quatre jauges de contraintes doivent être intégrées selon un agencement bien précis dans chaque pédale, et interconnectées. Il en résulte que ces dispositifs sont particulièrement complexes, onéreux et délicats à installer. En pratique, l'installation des dispositifs de ce type nécessite l'intervention de personnel spécialisé. Leur utilisation se limite généralement au domaine du cyclisme professionnel de très haut niveau.

D'autres solutions de mesure de la puissance utile développée par un cycliste sur une bicyclette sont décrites dans les documents DE102005027181, US20070245835 et EP2028098.

Il serait souhaitable de pouvoir disposer de systèmes de mesure de puissance accessibles à un plus grand public que les systèmes actuels.

Il serait en outre souhaitable de pouvoir optimiser l'utilisation d'un système d'assistance motorisée au pédalage.

### Résumé

Ainsi, un objet d'un mode de réalisation de la présente invention est de prévoir un système de mesure de la puissance utile développée dans un véhicule à pédales, palliant tout ou partie des inconvénients des solutions existantes.

Un objet d'un mode de réalisation de la présente invention est de prévoir un tel système moins complexe et moins onéreux que les solutions existantes.

Un objet d'un mode de réalisation de la présente invention est de prévoir un tel système facile à installer, et notamment ne nécessitant pas d'être installé par un personnel spécialisé.

Ainsi, un mode de réalisation de la présente invention prévoit un système de mesure de la puissance utile développée dans un dispositif à pédalier, comprenant : sur au moins une pédale d'actionnement d'une manivelle du pédalier, un unique capteur de pression adapté à mesurer la force exercée par l'utilisateur orthogonalement à la pédale ; au moins un capteur pour déterminer la position angulaire de la manivelle autour d'un axe de rotation du pédalier distinct d'un axe de rotation de la pédale par rapport à la manivelle ; et un calculateur pour déterminer, à l'aide d'un modèle préétabli de répartition de l'effort exercé sur la pédale en fonction de ladite position angulaire, la force tangentielle exercée sur la manivelle.

Selon un mode de réalisation de la présente invention, ce système de mesure comprend un élément de fixation à la pédale sur lequel est fixé le capteur de pression, et une plaque d'interface adaptée à transmettre un effort exercé par le cycliste audit capteur de pression.

Selon un mode de réalisation de la présente invention, l'élément de fixation est monté sur la pédale par des glissières latérales prévues sur la pédale.

Selon un mode de réalisation de la présente invention, l'élément de fixation est vissé sur une ossature de la pédale.

Selon un mode de réalisation de la présente invention, l'élément de fixation est clipsé sur une partie de corps ou sur un axe de la pédale.

Selon un mode de réalisation de la présente invention, le capteur de pression est en regard d'un axe de fixation de la pédale à la manivelle.

Selon un mode de réalisation de la présente invention, le capteur de pression comprend une jauge de contraintes ou un élément piézoélectrique.

Selon un mode de réalisation de la présente invention, le système de mesure comprend en outre des moyens pour déterminer la vitesse angulaire de la manivelle.

Selon un mode de réalisation de la présente invention, le système de mesure comprend en outre des moyens pour déterminer l'accélération de la manivelle.

Selon un mode de réalisation de la présente invention, le capteur de position angulaire comprend un accéléromètre, un gyroscope ou un capteur d'angle magnétique.

Selon un mode de réalisation de la présente invention, les capteurs sont adaptés à communiquer avec le calculateur via une liaison sans fil.

On prévoit également une bicyclette équipée d'un système de mesure de puissance.

On prévoit également un système d'asservissement d'un moteur d'assistance au pédalage dans un véhicule à pédales, comprenant : un système de mesure de la puissance utile développée dans un dispositif à manivelle ; et des moyens pour faire varier la puissance du moteur à la hausse lorsque la puissance fournie par l'utilisateur diminue et à la baisse lorsque la puissance fournie par l'utilisateur augmente.

On prévoit également une bicyclette équipée d'un moteur d'assistance au pédalage et d'un système d'asservissement de ce moteur.

On prévoit également un procédé d'utilisation d'un système de mesure de puissance, comprenant les étapes suivantes : a) mesurer la force exercée par l'utilisateur orthogonalement à la pédale ; b) déterminer la position angulaire de la manivelle autour de l'axe de rotation du pédalier ; et c) à l'aide d'un modèle préétabli de répartition de l'effort exercé sur la pédale en fonction de ladite position -angulaire, en déduire la force tangentielle exercée sur la manivelle.

Selon un mode de mise en oeuvre de la présente invention, ce procédé comporte en outre, avant l'étape c), les étapes suivantes : d) déterminer la vitesse angulaire de la manivelle autour de l'axe du pédalier ; et e) sélectionner ledit modèle parmi une liste de modèles préétablis.

Selon un mode de mise en oeuvre, le procédé comporte en outre l'étape suivante : déduire de ladite force tangentielle la puissance utile développée.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est une vue de côté représentant de façon schématique un mode de réalisation d'un pédalier de bicyclette ;
la figure 2 est un diagramme représentant de façon schématique l'évolution, au cours d'un cycle de pédalage, des forces exercées par un cycliste sur une manivelle de pédalier par l'intermédiaire d'une pédale ;
la figure 3 est une vue de côté d'un pédalier, illustrant de façon schématique et partielle un mode de réalisation d'un système de mesure de puissance ;
la figure 4 représente de façon schématique une bicyclette équipée d'un système de mesure de puissance du type décrit en relation avec la figure 3 ;
les figures 5A et 5B sont des vues en perspective représentant de façon plus détaillée un mode de réalisation d'un système de mesure de puissance adapté à être monté sur une pédale de bicyclette ;
les figures 6A et 6B sont des vues en perspective représentant une variante de réalisation du système de mesure des figures 5A et 5B ;
les figures 7A et 7B sont des vues en perspective représentant une autre variante de réalisation non revendiquée du système de mesure des figures 5A et 5B ;
les figures 8A et 8B sont des vues en perspective représentant une autre variante de réalisation du système de mesure des figures 5A et 5B ;
les figures 9A et 9B sont des vues en perspective représentant une autre variante de réalisation du système de mesure des figures 5A et 5B ;
les figures 10A, 10B et 10C représentent un autre exemple de réalisation non revendiqué d'un système de mesure de puissance monté sur une pédale de bicyclette ; et
les figures 11A et 11B représentent une variante de réalisation du système de mesure des figures 10A à 10C.

### Description détaillée

Par souci de clarté, de mêmes éléments ont été désignés par de mêmes références aux différentes figures et, de plus, les diverses figures ne sont pas tracées à l'échelle.

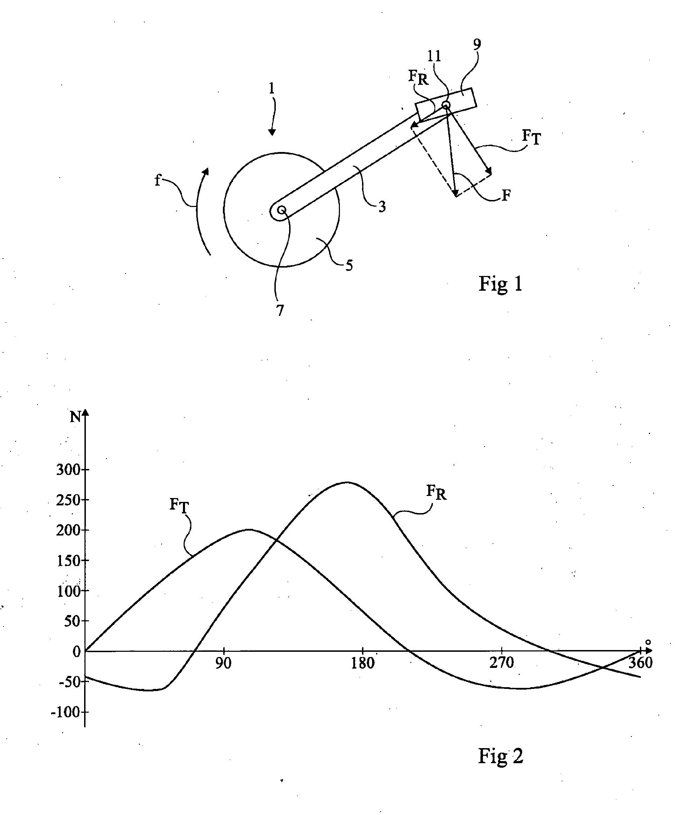

La figure 1 est une vue de côté représentant de façon schématique un mode de réalisation d'un pédalier 1 de bicyclette. Le pédalier 1 comprend une manivelle 3 dont une première extrémité est fixée à un plateau de transmission 5 de forme générale circulaire. La manivelle 3, constituée par exemple d'une barre ou d'un tube rigide, est fixée au plateau 5 selon une direction radiale. Le plateau 5 est mobile en rotation autour d'un axe 7 orthogonal au plateau et passant par le centre du plateau. L'axe 7 constitue l'axe de rotation du pédalier. En périphérie, le plateau 5 comprend généralement des dents, non représentées, adaptées à entraîner une chaîne de transmission. Du côté de sa seconde extrémité, la manivelle 3 est adaptée à recevoir une pédale 9 mobile en rotation autour d'un axe 11 parallèle à l'axe 7. Une seconde manivelle (non représentée) est généralement prévue sur l'axe 7, de l'autre côté du cadre dans le cas d'une bicyclette, formant un angle d'approximativement 180° avec la manivelle 3. Cette seconde manivelle supporte une seconde pédale (non représentée) mobile en rotation autour d'un axe parallèle à l'axe 11.

Lorsque le cycliste appuie sur les pédales, l'effort est transmis au plateau 5 par les manivelles 3, entraînant un mouvement de rotation du pédalier autour de l'axe 7 (dans le sens illustré par la flèche f).

La figure 2 est un diagramme, représentant de façon schématique l'évolution, au cours d'un cycle de pédalage, des forces exercées par un cycliste sur la manivelle 3 (figure 1) par l'intermédiaire de la pédale 9. En abscisse, on a représenté l'angle, en degrés (°), formé entre la manivelle et la verticale, et en ordonnée, là valeur des forces en newton (N). Ce diagramme correspond à un cycle de pédalage complet, de 0 à 360°., effectué sur une bicyclette en position normale de fonctionnement, sur une route sans dénivelé significatif. Un angle de 0° (ou 360°) en abscisse correspond au passage de la pédale à sa position la plus haute, alors qu'un angle de 180° correspond au passage de la pédale à sa position la plus basse.

Lorsque le cycliste appuie sur les pédales, la force F (figure 1) transmise à chaque manivelle est en fait la somme d'une force tangentielle F_{T}, orthogonale à la manivelle et parallèle au plan du plateau de transmission, et d'une force radiale F_{R}, parallèle à la manivelle. La composante tangentielle F_{T} est une force motrice, entraînant la mise en rotation du pédalier autour de son axe. En revanche, la composante radiale F_{R} est une force qui ne contribue pas à la mise en mouvement de la bicyclette.

Comme l'illustre la figure 2, les composantes tangentielle F_{T} et radiale F_{R} évoluent en fonction de l'angle formé entre la manivelle et le pédalier. Dans cet exemple, la composante F_{T} est maximale (proche de 200 N) autour de 100°, et minimale (proche de -60 N) autour de 300°. La composante F_{R} est maximale (proche de 270 N) autour de 170°, et minimale (proche de -70 N) autour de 50°. La composante F_{T} s'annule brièvement approximativement à 200° et à 360°, et la composante F_{R} s'annule brièvement approximativement à 70° et à 320°.

Différents facteurs sont susceptibles de modifier le mode de décomposition de la force totale F exercée sur la pédale en les composantes F_{T} et F_{R}. Il s'agit essentiellement de la pente, de la position du cycliste debout (en danseuse) ou assis, et de la cadence de pédalage. On notera par exemple que, plus la cadence de pédalage est élevée, plus la proportion de la force totale F que représente la composante motrice F_{T} est faible. Par ailleurs, la pente tend à décaler les points d'inflexion des courbes de la figure 2. En particulier, en montée, les points d'inflexion sont déplacés vers la gauche. On notera en outre que lorsque le cycliste est debout sur les pédales, le pic de force est décalé vers la droite par rapport au diagramme de la figure 2.

En revanche, on observe que dans des conditions données de pente, de cadence de pédalage, et de position du cycliste, la décomposition de la force F en les composantes F_{T} et F_{R} en fonction de la position angulaire du pédalier, varie peu d'un cycliste à un autre.

On peut par conséquent établir un jeu de modèles universels de répartition de l'effort de pédalage, correspondant à diverses combinaisons de conditions couramment rencontrées par les cyclistes (montée, plat, descente, position debout, position assis, cadence rapide, cadence lente, etc.). Des modèles de ce type ont été publiés, dans les années 2000, par le Laboratoire des sciences du sport de l'Université de Besançon, dans le rapport *"*Comparaisons de patterns de pédalage en cyclisme dans les conditions de laboratoire et de terrain" de "William Bertucci *".*

A partir de modèles de ce type, on propose ici d'extraire des tableaux de correspondance définissant l'évolution du pourcentage de la force F que représente la composante motrice F_{T}, en fonction de la position angulaire de la manivelle, le cas échéant en le déduisant de la composante radiale F_{R}.

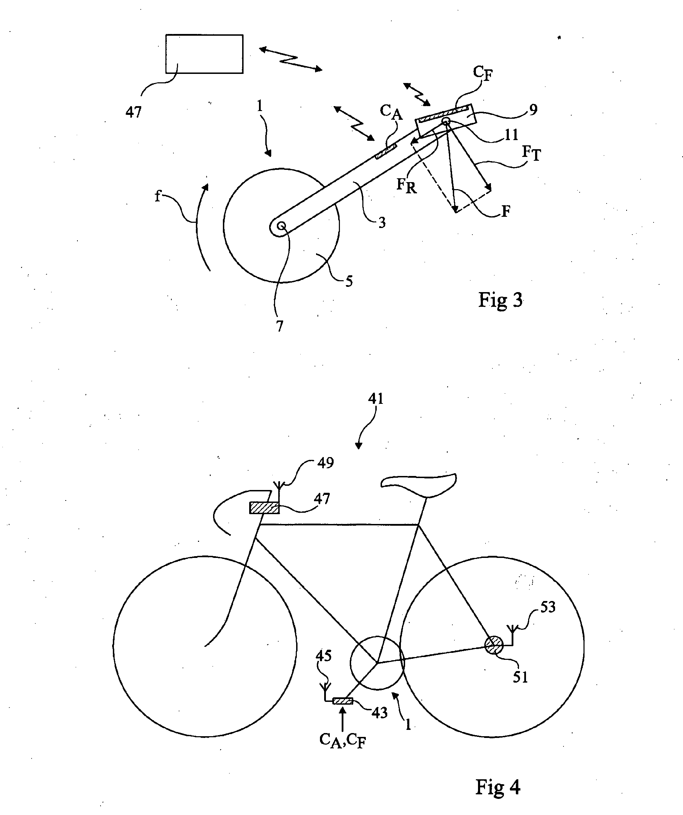

La figure 3 est une vue de côté d'un pédalier 1 du type décrit en relation avec la figure 1, illustrant de façon schématique et partielle un système de mesure de la puissance utile développée par le cycliste.

Selon un aspect d'un mode de réalisation de la présente invention, on prévoit un système de mesure de puissance comportant :
sur une pédale 9, un unique capteur de pression C_{F} adapté à mesurer la force totale F exercée par le cycliste ;
sur la pédale ou sur le pédalier (sur la manivelle 3 dans l'exemple représenté), au moins un capteur C_{A} de la position angulaire de la manivelle autour de l'axe 7 du pédalier ; et
un calculateur 47 pour déterminer, à partir de la position angulaire mesurée et d'un modèle de correspondance préétabli, le pourcentage de la force F que représente la composante motrice F_{T}.

Connaissant la valeur de la composante F_{T}, on peut calculer la puissance utile Pu développée par le cycliste et définie comme suit : Pu = F_{T} x Lₘ x Vₐ, où Lₘ est la longueur de la manivelle et Vₐ la vitesse angulaire du pédalier. La vitesse angulaire du pédalier est par exemple fournie par le capteur C_{A}.

Par force totale F exercée par le cycliste, on entend ici la force résultante de la somme de toutes les forces exercées par le cycliste sur la pédale et transmises à la manivelle 3. Les inventeurs ont constaté qu'en pratique, lors d'un cycle de pédalage, cette force est toujours sensiblement orthogonale à la pédale, c'est-à-dire orthogonale au plan de contact entre la semelle de la chaussure du cycliste et la pédale. Ceci est particulièrement vrai dans la phase de motricité du cycle de pédalage, c'est-à-dire lorsque la position angulaire de la manivelle autour de l'axe du pédalier est comprise entre 0 et 180° (positions verticales de la manivelle). Dans la présente description, on assimile donc la force totale F à sa composante orthogonale à la pédale. Dans le système de mesure proposé, le capteur C_{F} est un simple capteur de pression disposé dans ou sur la pédale 9 et adapté à mesurer la force exercée par le cycliste orthogonalement à la pédale. Un avantage est donc qu'il n'est pas nécessaire de prévoir une pluralité de capteurs mesurant les différentes composantes de la force F.

Un avantage d'un tel système de mesure est qu'il ne nécessite, pour déterminer la composante motrice F_{T} de la force exercée par le cycliste sur une pédale, qu'un unique capteur de pression C_{F} sur cette pédale. Le capteur CF peut être très simple. Il s'agit par exemple d'un capteur de pression du type utilisé dans les pèse-personnes. La composante motrice F_{T} est alors déterminée de façon logicielle par le calculateur 47, en fonction de la position angulaire du pédalier. L'équipement est donc considérablement simplifié par rapport aux solutions existantes.

Dans un mode de réalisation particulièrement simplifié, on pourra utiliser un unique modèle de correspondance entre la position angulaire de la manivelle et le pourcentage de la force F que représente la composante motrice F_{T}, indépendamment des conditions dans lesquelles évolue le cycliste.

Toutefois, pour une meilleure précision de la mesure, on utilise de préférence un jeu de plusieurs modèles correspondant à diverses combinaisons de conditions couramment rencontrées par les cyclistes.

Le facteur prédominant pour la répartition de la force F en les composantes tangentielles et radiales F_{T} et F_{R} est la cadence de pédalage. Ainsi, dans un mode de réalisation préféré, le modèle de correspondance est choisi parmi un jeu de plusieurs modèles, en fonction de la cadence de pédalage.

Dans un mode de réalisation préféré, le capteur de position angulaire C_{A} est un accéléromètre placé sur le pédalier ou dans la pédale. Une liaison de communication, par exemple une liaison sans fil, est prévue entre le capteur C_{A} et le calculateur 47. Les mesures de l'accélération du pédalier permettent d'obtenir un signal aisément exploitable de l'accélération radiale et d'identifier ainsi des points caractéristiques de la phase de la pédale (par exemple d'identifier quand elle se trouve en position haute) et de recaler les mesures, c'est-à-dire prendre en compte des données de capteurs de puissance entre deux intervalles adjacents dans un cycle afin de leur appliquer un algorithme donné, en fonction de la position de ces données dans le cycle, pour les convertir en puissance efficace. Ces mesures permettent de calculer la vitesse angulaire du pédalier autour de l'axe 7 (par exemple via le calculateur 47), c'est-à-dire la cadence de pédalage. On notera que les mesures d'accélération du pédalier permettent également de déterminer la pente et la position du cycliste. Ainsi, dans une variante de réalisation, les facteurs pente et position pourront donc être pris en compte pour le choix du modèle de répartition des forces. Pour déterminer les conditions de pente et de position, la mesure d'accélération porte de préférence sur au moins un cycle complet de pédalage. La courbe d'accélération du pédalier constitue une signature qui peut être comparée à des relevés préétablis, stockés dans le calculateur. Plus généralement, toute autre méthode adaptée à déterminer les conditions dans lesquelles évolue le cycliste pourra être utilisée. Un coefficient de modulation peut ensuite être appliqué au modèle choisi en fonction de la cadence de pédalage.

Dans un autre mode de réalisation, le capteur C_{A} comprend une roue codeuse, permettant de déterminer à tout instant la position angulaire de la manivelle autour de l'axe 7. Le calcul de la vitesse angulaire, et donc de la cadence de pédalage, peut alors être effectué par le calculateur 47. Un avantage de ce mode de réalisation réside dans son faible prix de revient.

Dans un autre mode de réalisation, le capteur CA comprend un gyromètre adapté à fournir directement une mesure de la vitesse angulaire de la manivelle autour de l'axe 7.

Dans un autre mode de réalisation, le capteur CA comprend un capteur d'angles magnétique.

Dans l'exemple représenté en figure 3, le capteur de pression C_{F} est disposé du côté de la pédale 9 contre lequel est susceptible de venir s'appuyer le pied du cycliste. Le capteur C_{F} est adapté à communiquer avec le calculateur 47, par exemple via une liaison sans fil. Le capteur C_{F} peut être alimenté par une batterie logée dans la pédale, par un système de récupération d'énergie associé au pédalier, ou par tout autre moyen. Selon une variante de réalisation, le capteur C_{F} peut être un capteur à élément piézoélectrique autonome en énergie.

Le calculateur 47 comprend par exemple un micro-contrôleur pour exécuter des instructions logicielles, et une mémoire pour stocker des modèles de répartition de l'effort de pédalage.

La figure 4 représente de façon schématique une bicyclette 41 équipée d'un système de mesure de puissance du type décrit en relation avec la figure 3. Dans cet exemple, les capteurs C_{A} et C_{F} sont intégrés dans un même boîtier 43 fixé sur la pédale et comprenant une antenne de communication sans fil 45. Le calculateur 47 est placé dans un boîtier muni d'une antenne de communication sans fil 49. Dans l'exemple représenté, le calculateur 47 est placé au niveau du guidon de la bicyclette. Il est par exemple intégré à un boîtier d'affichage d'un compteur de vitesse.

La bicyclette 41 comprend en outre, du côté de sa roue arrière, un moteur 51 d'assistance au pédalage, par exemple un moteur électrique. Dans cet exemple, le système de mesure de puissance est utilisé pour optimiser l'utilisation du moteur d'assistance 51. Une antenne 53 prévue du côté du moteur 51 permet d'établir une communication entre le moteur et le calculateur. On propose ici d'utiliser la mesure de la puissance fournie par le cycliste pour commander des variations de vitesse du moteur 51, à la hausse lorsque la puissance fournie par le cycliste diminue, et à la baisse lorsque la puissance fournie par le cycliste augmente.

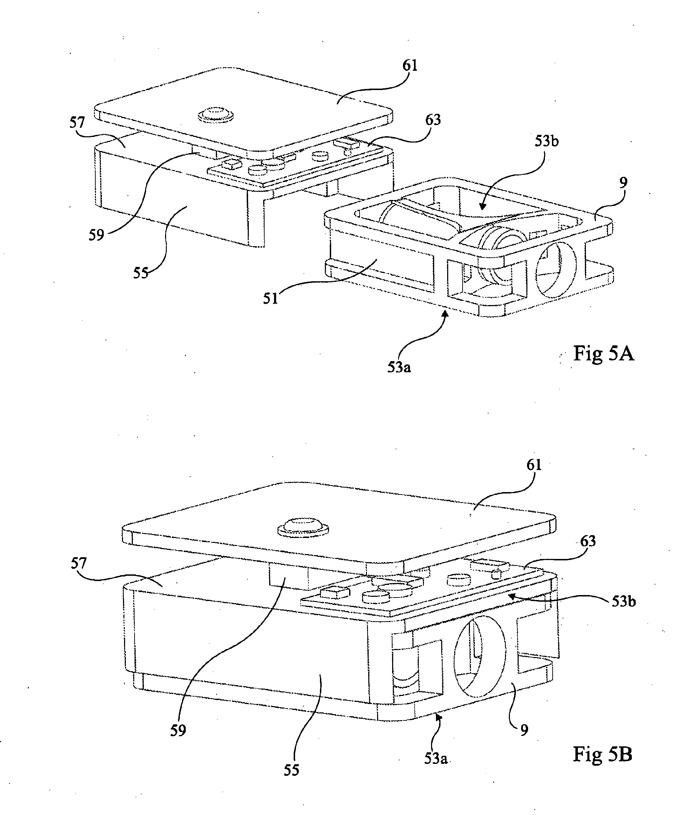

Les figures 5A et 5B sont des vues en perspective représentant de façon plus détaillée un mode de réalisation d'un système de mesure de puissance adapté à être monté sur une pédale 9 de bicyclette. La figure 5A est une vue éclatée (avant montage du système de mesure) du système de la figure 5B (système de mesure monté sur la pédale).

La pédale 9 a une forme extérieure générale sensiblement parallélépipédique comportant deux faces principales parallèles en regard 53a et 53b et quatre faces latérales de plus petites surfaces (non référencées sur la figure). Dans cet exemple, la pédale 9 comporte, sur au moins une face latérale, une glissière 51, par exemple une glissière du type habituellement prévu pour recevoir des bandes réfléchissantes (catadioptres).

Le système de mesure de puissance proposé comprend un élément 55 de fixation à la pédale. L'élément 55 est ici un boîtier (ou une portion d'un boîtier) adapté à venir recouvrir l'une des faces principales de la pédale (face 53b dans cet exemple) et deux faces latérales parallèles dont l'une au moins comprend une glissière 51. L'élément de fixation 55 vient s'emboîter dans la ou les glissières 51. On notera que des glissières latérales sont souvent prévues sur les pédales de bicyclette. Le système proposé tire profit de ces glissières et peut donc être facilement monté sur toutes les pédales de ce type.

Sur la face 57 du boîtier 55 en regard de la face 53b de la pédale, côté opposé à la pédale, est fixé un capteur de pression 59, par exemple au moyen d'une vis ou de colle. Le capteur 59 est par exemple un capteur piézoélectrique, ou une jauge de déformation comprenant un corps d'épreuve adapté à transmettre des déformations à un circuit électrique de façon à modifier sa résistivité. Une plaque d'interface 61 parallèle à la face 57 du boîtier est fixée au capteur de pression 59, côté opposé à la face 57. La plaque d'interface 61 est une plaque rigide, par exemple en métal ou en plastique, destinée, en fonctionnement, à être en contact avec le pied (ou la chaussure) du cycliste. Lorsque le cycliste appuie sur la pédale, la plaque 61 transmet l'effort exercé, et le capteur 59 se déforme, fournissant une mesure représentative de la composante orthogonale à la face 53b (ou à la plaque 61) de l'effort exercé par le cycliste.

Le système de mesure comprend en outre un circuit électronique 63 disposé entre l'élément de fixation 55 et la plaque de protection 61. Le circuit 63 est adapté à traiter les signaux fournis par le capteur 59 et à communiquer avec un système extérieur. Le circuit 63 peut en outre comprendre un accéléromètre et/ou un gyroscope pour mesurer la vitesse angulaire de la manivelle autour de l'axe du pédalier.

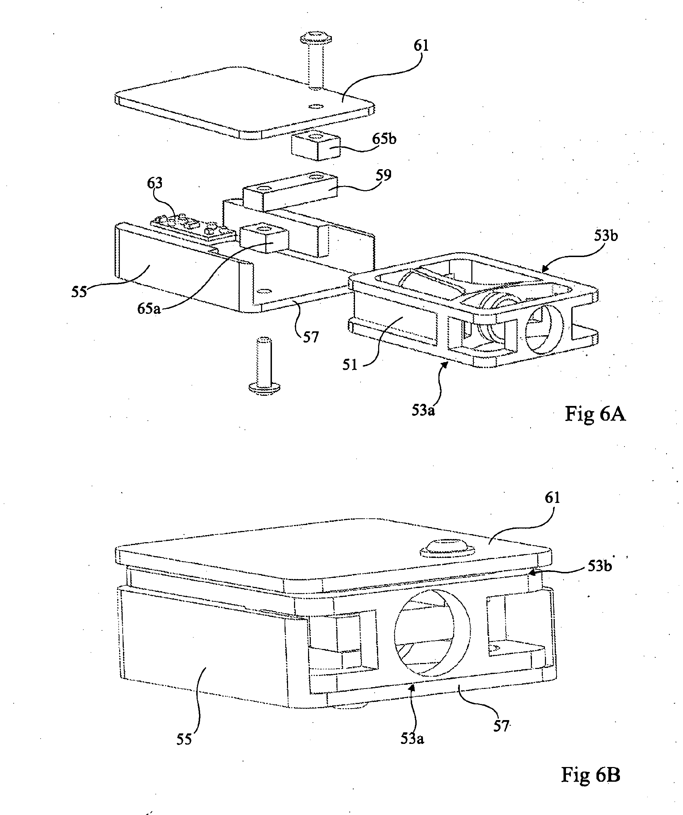

Les figures 6A et 6B sont des vues en perspective représentant une variante de réalisation du système de mesure de puissance des figures 5A et 5B. La figure 6A est une vue éclatée (avant montage du système de mesure) du système de la figure 6B (système de mesure monté sur la pédale).

Le système des figures 6A et 6B diffère du système des figures 5A et 5B en ce que le capteur de pression 59 est disposé dans un espace vide de la pédale 9, entre les faces 53a et 53b. Dans cet exemple, la face 57 du boîtier 55 est en regard de la face 53a de la pédale, et la plaque de transmission 61 est côté face 53b de la pédale. Des entretoises 65a et 65b sont prévues respectivement entre la face 57 et le capteur 59 et entre le capteur 59 et la plaque 61, pour transmettre l'effort exercé par le cycliste au capteur 59 (via la plaque 61).

On notera que des espaces vides sont souvent prévus dans les pédales de bicyclette. Le système proposé tire profit de ces espaces.

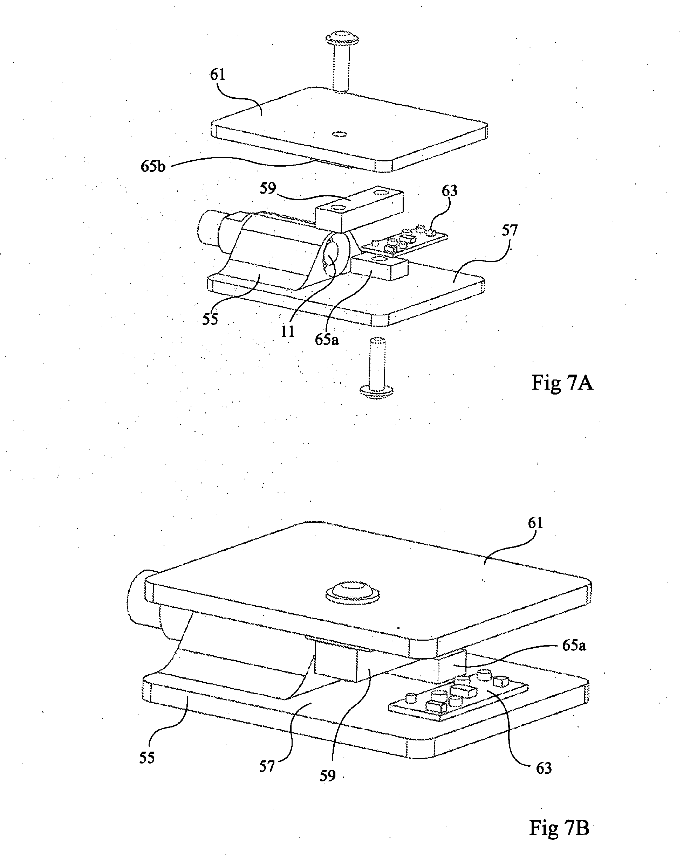

Les figures 7A et 7B sont des vues en perspective représentant une autre variante de réalisation non revendiquée du système de mesure de puissance des figures 5A et 5B. La figure 7A est une vue éclatée (avant montage du système de mesure) du système de la figure 7B (système de mesure monté sur la pédale).

Dans cette variante, l'élément de fixation 55 est monté non pas sur des glissières prévues sur des faces latérales de la pédale, mais sur l'axe de rotation 11 de la pédale. L'élément 55 comprend une partie plane 57 supportant, par l'intermédiaire d'une entretoise 65a, le capteur de pression 59. Comme dans l'exemple des figures 6A et 6B, une entretoise 65b fait interface entre le capteur 59 et la plaque d'interface 61.

Le système décrit remplace la pédale, ce qui le rend facilement montable sur toute bicyclette en remplacement des pédales existantes.

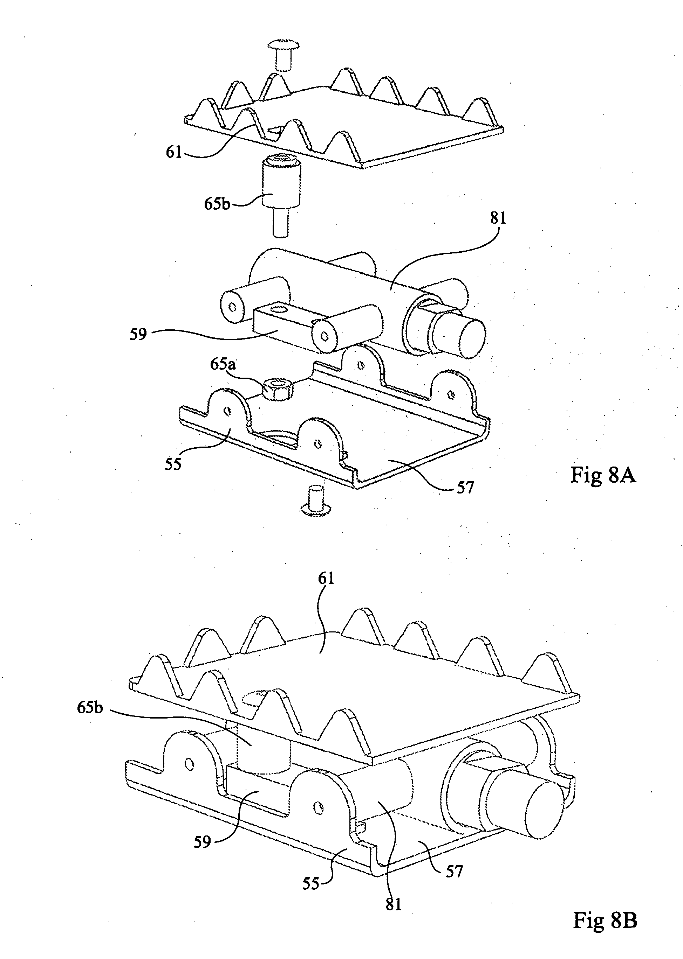

Les figures 8A et 8B sont des vues en perspective représentant une autre variante de réalisation du système de mesure de puissance des figures 5A et 5B, monté autour de l'ossature 81 d'une pédale. La figure 8A est une vue éclatée (avant montage du système de mesure) du système de la figure 8B (système de mesure monté sur la pédale). Cette réalisation tire profit des espaces libres entre les deux plaques d'une pédale de ce type. Dans cet exemple, l'élément 55 est fixé à l'ossature 81 de la pédale au moyen de vis (quatre vis, non représentées sur la figure), et le capteur de pression 59 est logé dans un espace laissé libre par l'ossature 81, entre les deux plaques de la pédale.

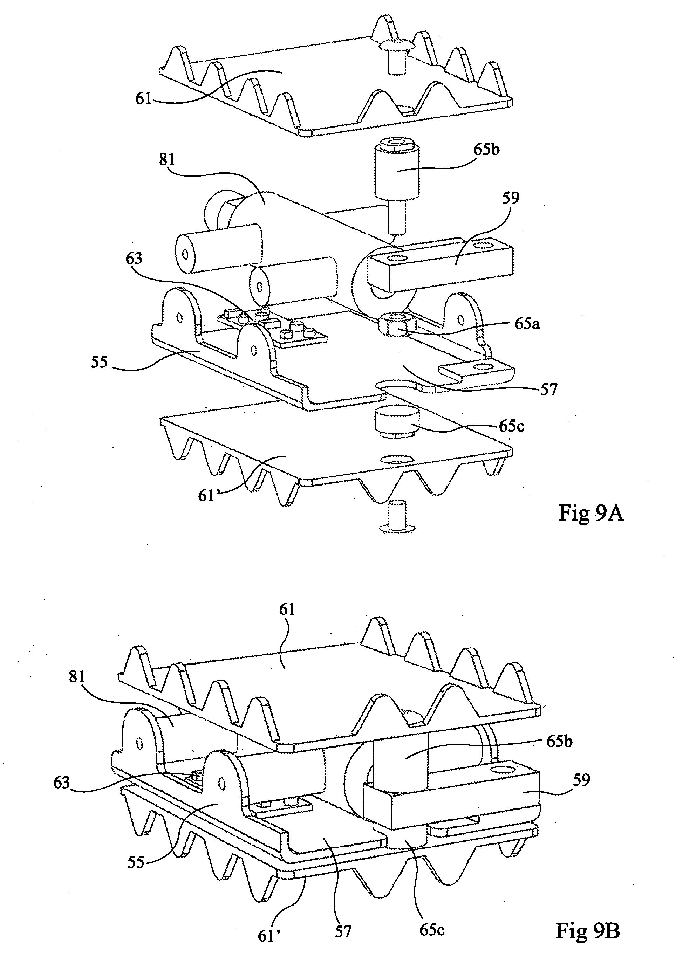

Les figures 9A et 9B sont des vues en perspective représentant une autre variante de réalisation du système de mesure de puissance des figures 5A et 5B. La figure 9A est une vue éclatée (avant montage du système de mesure) du système de la figure 9B (système de mesure monté sur la pédale). Le système des figures 9A et 9B est, comme le système des figures 8A et 8B, monté autour de l'ossature 81 d'une pédale, et diffère de ce système en ce qu'il est adapté à mesurer la puissance utile développée par le cycliste quelle que soit la face principale de la pédale en contact avec le pied du cycliste. Pour cela, une seconde plaque d'interface 61', disposée du côté de la pédale opposé à la plaque d'interface 61, est adaptée à transmettre au capteur 59, via une entretoise 65c, un effort exercé par le cycliste.

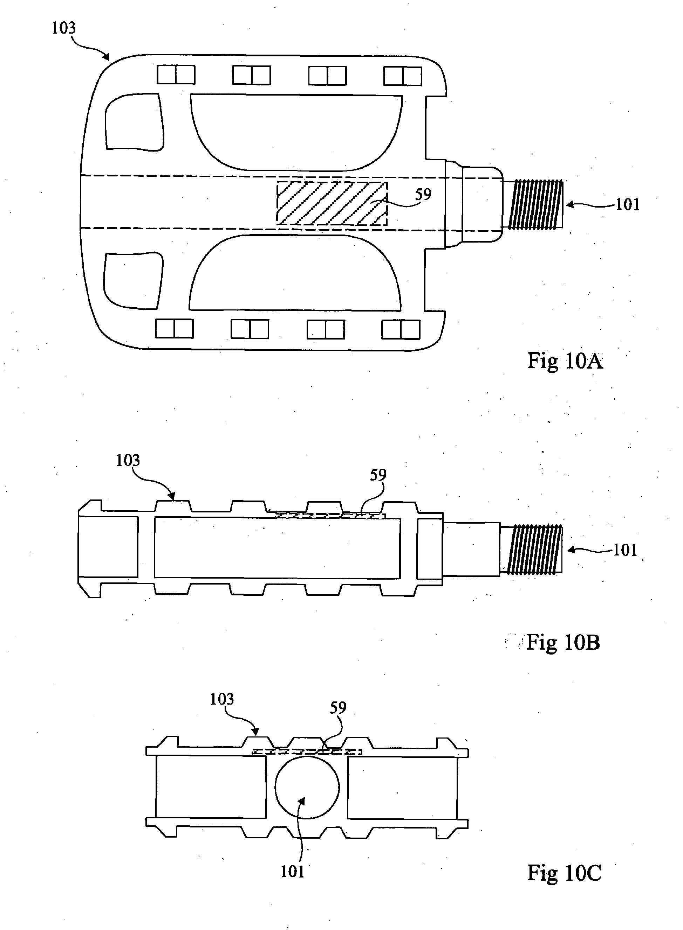

Les figures 10A, 10B et 10C représentent un autre exemple de réalisation non revendiqué d'un système de mesure de la puissance utile développée, monté sur une pédale de bicyclette. La figure 10A est une vue de dessus de la pédale, et les figures 10B et 10C sont des vues de devant et de côté. Dans cet exemple, la pédale comprend deux parties : l'axe 101 de la pédale (axe de rotation), par exemple en métal forgé, destiné à être relié à la manivelle (par exemple vissé à la manivelle) ; et le corps 103, par exemple en plastique moulé autour de l'axe.

Dans cet exemple, on propose de positionner le capteur de pression 59 du système de mesure de puissance (par exemple un capteur piézoélectrique) à l'intérieur de la partie du corps 103 en regard de l'axe 101, de préférence dans la partie de la pédale située du côté de la manivelle (partie droite de la pédale dans la vue de la figure 10A). Cette région de la pédale est en effet la région où les pressions exercées par le pied du cycliste orthogonalement à la pédale sont les plus importantes. Le capteur de pression est par exemple noyé dans le plastique du corps 103.

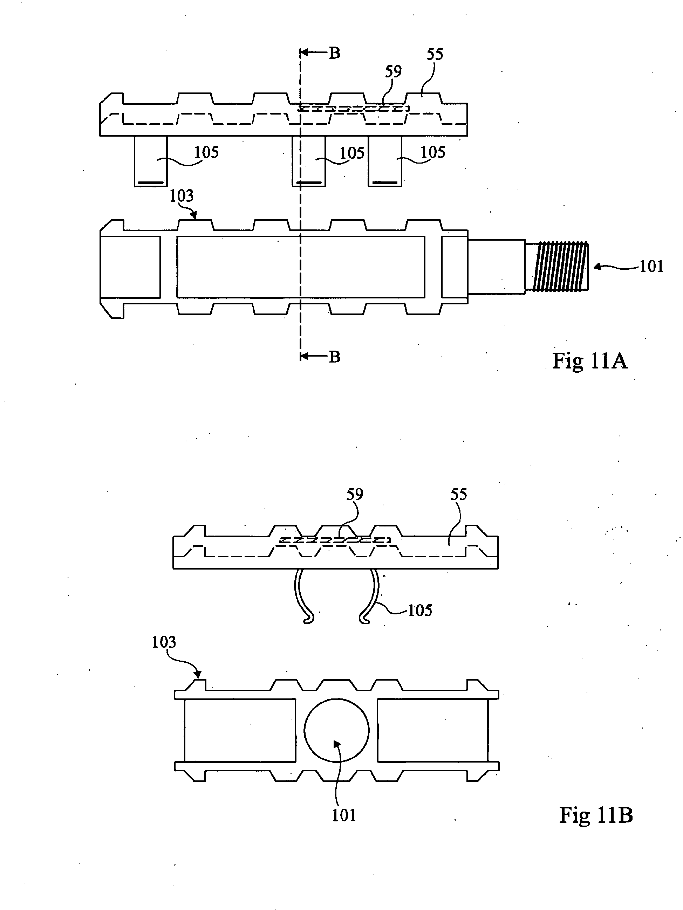

Les figures 11A et 11B sont respectivement des vues de côté et de devant illustrant une variante de réalisation du système décrit en relation avec les figures 10A à 10C. La figure 11B est une vue en coupe selon le plan B-B de la figure 11A. Dans cet exemple, le système de mesure de puissance, et plus particulièrement le capteur de pression 59, viennent se positionner au dessus du corps 103 de la pédale. Le système de mesure est monté sur un élément 55 de fixation à la pédale. L'élément 55 vient se superposer au corps 103, et se clipse sur l'axe 101 au moyen d'un système de fixation 105. L'élément 55 est par exemple en plastique moulé, le capteur de pression 59 pouvant être noyé dans le plastique de l'élément 55. Le moulage de l'élément 55 peut correspondre au négatif de la surface supérieure du corps 103, de façon à garantir qu'aucun jeu parasite significatif n'intervienne entre l'élément 55 et le corps 103. Comme dans l'exemple des figures 10A à 10C, le capteur de pression 59 sera positionné dans la zone de la pédale dans laquelle la pression exercée par le cycliste est la plus forte, c'est-à-dire en regard de l'axe 101 de fixation à la manivelle, et de préférence dans la moitié de la pédale la plus proche de la manivelle (moitié droite dans la vue de la figure 11A).

Des modes de réalisation particuliers de la présente invention ont été décrits. Diverses variantes et modifications apparaîtront à l'homme de l'art. En particulier, dans les exemples décrits et représentés ci-dessus, une seule pédale a été mentionnée. On notera que le système proposé pourra être installé, au choix, sur une pédale ou sur les deux pédales d'une bicyclette ou de tout autre véhicule à pédales.

## Revendications

1. Système de mesure de la puissance utile développée dans un dispositif à pédalier, comprenant :
sur au moins une pédale (9) d'actionnement d'une manivelle (3) du pédalier, un unique capteur de pression (59, C_{F}) adapté à fournir une mesure représentative de la force (F) exercée par l'utilisateur orthogonalement à la pédale ;
au moins un capteur (C_{A}) adapté à déterminer la position angulaire de la manivelle (3) autour d'un axe (7) de rotation du pédalier distinct d'un axe de rotation de la pédales par rapport à la manivelle ;
un calculateur (47) pour déterminer, à l'aide d'un modèle préétabli de répartition de l'effort exercé sur la pédale en fonction de ladite position angulaire, la force tangentielle (F_{T}) exercée sur la manivelle ; **caractérisé par**
un élément (55) de fixation à la pédale sur lequel est fixé le capteur (C_{F}, 59) de pression, et une plaque (61) d'interface adaptée à transmettre un effort exercé par le cycliste audit capteur de pression,
dans lequel ledit élément de fixation est monté sur la pédale par des glissières (51) latérales prévues sur la pédale ou vissé sur une ossature (81) de la pédale ou clipsé sur une partie de corps (103) ou sur un axe (101) de la pédale.

2. Système de mesure selon la revendication 1, dans lequel ledit capteur (C_{F}, 59) de pression est en regard d'un axe (101) de fixation de la pédale à la manivelle.

3. Système de mesure selon la revendication 1 ou 2, dans lequel ledit capteur (C_{F}, 59) de pression comprend une jauge de contraintes ou un élément piézoélectrique.

4. Système de mesure selon l'une quelconque des revendications 1 à 3, comprenant en outre des moyens (C_{A}) pour déterminer la vitesse angulaire de la manivelle.

5. Système de mesure selon l'une quelconque des revendications 1 à 4, comprenant en outre des moyens (C_{A}) pour déterminer l'accélération de la manivelle.

6. Système de mesure selon l'une quelconque des revendications 1 à 5, dans lequel ledit au moins un capteur de position angulaire comprend un accéléromètre, un gyroscope, ou un capteur d'angles magnétique.

7. Système de mesure selon l'une quelconque des revendications 1 à 6, dans lequel lesdits capteurs sont adaptés à communiquer avec le calculateur (47) via une liaison sans fil.

8. Bicyclette équipée d'un système de mesure de puissance selon l'une quelconque des revendications 1 à 7.

9. Système d'asservissement d'un moteur (51) d'assistance au pédalage dans un véhicule à pédales (41), comprenant :
un système selon l'une quelconque des revendications 1 à 7 ; et
des moyens pour faire varier la puissance du moteur à la hausse lorsque la puissance fournie par l'utilisateur diminue et à la baisse lorsque la puissance fournie par l'utilisateur augmente.

10. Bicyclette (41) équipée d'un moteur (51) d'assistance au pédalage et d'un système d'asservissement de ce moteur selon la revendication 9.

11. Procédé d'utilisation d'un système de mesure de puissance selon l'une quelconque des revendications 1 à 7, comprenant les étapes suivantes :
a) mesurer la force (F) exercée par l'utilisateur orthogonalement à la pédale (9) ;
b) déterminer la position angulaire de la manivelle autour de l'axe (7) de rotation du pédalier ; et
c) à l'aide d'un modèle préétabli de répartition de la force exercée par l'utilisateur orthogonalement à la pédale en fonction de ladite position angulaire, en déduire la force tangentielle (F_{T}) exercée sur la manivelle.

12. Procédé selon la revendication 11, comportant en outre, avant l'étape c), les étapes suivante :
d) déterminer la vitesse angulaire de la manivelle autour de l'axe (7) du pédalier ; et
e) sélectionner ledit modèle parmi une liste de modèles préétablis.

13. Procédé selon la revendication 11 ou 12, comportant en outre l'étape suivante :
déduire de ladite force tangentielle (F_{T}) la puissance utile développée.

## Patentansprüche

1. Ein System zur Messung der Ausgangsleistung erzeugt in einem Kurbelsystem, wobei das Messsystem folgendes aufweist:
mindestens ein Pedal (9) zur Betätigung einer Kurbel (3) des Kurbelsystems, eine einzigartige Druckmessvorrichtung (59, C_{F}), die in der Lage ist ein Maß repräsentativ für die Kraft (F) zu liefern, die durch den Benutzer orthogonal auf das Pedal ausgeübt wird;
mindestens eine Messvorrichtung (C_{A}) geeignet zur Bestimmung der Winkelposition der Kurbel (3) um eine Rotationsachse (7) des Kurbelsystems herum, und zwar unterschiedlich von einer Rotationsachse des Pedals bezüglich der Kurbel;
einen Rechner (47) zur Bestimmung der tangentialen Kraft (F_{T}), ausgeübt auf die Kurbel, und zwar mit Hilfe eines zuvor festgelegten Modells der Verteilung der Kraft ausgeübt auf die Pedale entsprechend der erwähnten Winkelposition;
**gekennzeichnet durch**
ein Element (55) an dem die Druckmessvorrichtung (C_{F}, 59) befestigt ist, zur Befestigung an dem Pedal und
eine Zwischenplatte (61), die in der Lage ist eine **durch** den Radfahrer ausgeübte Kraft auf die Druckmessvorrichtung zu übertragen,
wobei das erwähnte Befestigungselement auf dem Pedal befestigt ist über seitliche Führungsschienen (51) vorgesehen auf dem Pedal oder angeschraubt ist an einem Rahmen (81) des Pedals oder angeschnappt ist an einem Körperteil (103) oder an einer Achse (101) des Pedals.

2. Das Meßsystem nach Anspruch 1, wobei die Druckmessvorrichtung (C_{F}, 59) auf eine Achse (101) der Befestigung des Pedals von der Kurbel hinweist.

3. Das Meßsystem nach Anspruch 1 oder 2, wobei die Druckmessvorrichtung (C_{F}, 59) ein Beanspruchungsmesser oder ein piezoelektrisches Element aufweist.

4. Das Meßsystem nach einem der Ansprüche 1 bis 3, wobei ferner Mittel (C_{A}) vorgesehen sind zur Bestimmung der Winkelgeschwindigkeit der Kurbel.

5. Das Meßsystem nach einem der Ansprüche 1 bis 4, wobei ferner Mittel (C_{A}) vorgesehen sind zur Bestimmung der Beschleunigung der Kurbel.

6. Das Meßsystem nach einem der Ansprüche 1 bis 5, wobei die mindestens eine Meßvorrichtung geeignet zur Bestimmung der Winkelposition einen Beschleunigungsmesser, ein Gyroskop oder einen magnetischen Winkelsensor aufweist.

7. Das Meßsystem nach einem der Ansprüche 1 bis 6, wobei die erwähnten Meßvorrichtungen in der Lage sind mit dem Rechner (47) über eine drahtlose Verbindung zu kommunizieren.

8. Ein Fahrrad ausgerüstet mit dem Leistungsmeßsystem nach einem der Ansprüche 1 bis 7.

9. Ein System zur Steuerung eines pedalunterstützten Motors (51) in einem Pedalfahrzeug (41), und zwar folgendes aufweisend:
ein System nach einem der Ansprüche 1 bis 7; und
Mittel zur Erhöhung der Motorleistung dann, wenn die durch den Benutzer gelieferte Leistung abnimmt und um die Leistung dann zu vermindern, wenn die durch den Benutzer gelieferte Leistung zunimmt.

10. Ein Fahrrad (41) ausgerüstet mit einem pedalunterstützten Motor (51) und mit dem System zur Steuerung dieses Motors nach Anspruch 9.

11. Ein Verfahren zur Verwendung des Leistungsmeßsystems nach einem der Ansprüche 1 bis 7, wobei die folgenden Schritte vorgesehen sind:
a) Messen der durch den Benutzer orthogonal zum Pedal (9) ausgeübten Kraft (F)
b) Bestimmung der Winkelposition der Kurbel um die Drehachse (7) des Pedals herum; und
c) Vermindern der Tangentialkraft (F_{T}) ausgeübt auf die Kurbel durch ein vorher festgelegtes Modell der Verteilung der durch den Benutzer orthogonal ausgeübten Kraft auf das Pedal entsprechend der erwähnten Winkelposition.

12. Das Verfahren nach Anspruch 11, wobei ferner das folgende vorgesehen ist:
vor dem Schritt c) die folgenden Schritte:
d) Bestimmen der Winkelgeschwindigkeit der Kurbel um die Achse (7) des Kurbelsystems herum; und
e) Auswahl des erwähnten Modells aus einer Liste von vorher festgelegten Modellen.

13. Das Verfahren nach Anspruch 11 oder 12, wobei ferner folgender Schritt vorgesehen ist:
Abziehen von der erwähnten Tangentialkraft (F_{T}) von der entwickelten Ausgangsleistung.

## Claims

1. A system for measuring the output power developed in a crankset, comprising:
on at least one pedal (9) for actuating a crank (3) of the crankset, a single pressure sensor (59, C_{F}) capable of providing a measure representative of the orthogonal force (F) exerted by the user on the pedal;
at least one sensor (C_{A}) adapted to determine the angular position of the crank (3) around a rotation axis (7) of the crankset different from a rotation axis of the pedal with respect to the crank;
a calculator (47) for determining, by means of a pre-established model of distribution of the force exerted on the pedal according to said angular position, the tangential force (F_{T}) exerted on the crank;
**characterized by** an element (55) of fastening to the pedal having the pressure sensor (C_{F}, 59) affixed thereto, and an interface plate (61) capable of transmitting a force exerted by the cyclist to said pressure sensor,
wherein said fastener is assembled on the pedal via lateral guide rails (51) provided on the pedal or screwed to a framework (81) of the pedal or snapped to a body portion (103) or to an axis (101) of the pedal.

2. The measurement system of claim 1, wherein said pressure sensor (C_{F}, 59) faces an axis (101) of fastening of the pedal to the crank.

3. The measurement system of claim 1 or 2, wherein said pressure sensor (C_{F}, 59) comprises a strain gauge or a piezoelectric element.

4. The measurement system of any of claims 1 to 3, further comprising means (C_{A}) for determining the angular velocity of the crank.

5. The measurement system of any of claims 1 to 4, further comprising means (C_{A}) for determining the acceleration of the crank.

6. The measurement system of any of claims 1 to 5, wherein said at least one angular position sensor comprises an accelerometer, a gyroscope, or a magnetic angle sensor.

7. The measurement system of any of claims 1 to 6, wherein said sensors are capable of communicating with the calculator (47) via a wireless link.

8. A bicycle equipped with the power measurement system of any of claims 1 to 7.

9. A system for controlling a pedal-assist motor (51) in a pedal vehicle (41), comprising:
the system of any of claims 1 to 7; and
means for increasing the motor power when the power provided by the user decreases and for decreasing it when the power provided by the user increases.

10. A bicycle (41) equipped with a pedal-assist motor (51) and with the system for controlling this motor of claim 9.

11. A method for using the power measurement system of any of claims 1 to 7, comprising the steps of:
a) measuring the force (F) exerted by the user orthogonally to the pedal (9);
b) determining the angular position of the crank around the rotation axis (7) of the crankset; and
c) by means of a pre-established model of distribution of the force exerted by the user orthogonally to the pedal according to said angular position, deducing the tangential force (F_{T}) exerted on the crank.

12. The method of claim 11, further comprising, before step c), the steps of:
b) determining the angular velocity of the crank around the axis (7) of the crankset; and
e) selecting said model from a list of pre-established models.

13. The method of claim 11 or 12, further comprising the step of:
deducing from said tangential force (F_{T}) the developed output power.
